Europäisches Patentamt

European Patent Office

Office européen des brevets

(19)

(11) Numéro de publication: **0 247 956
B1**

## (12) FASCICULE DE BREVET EUROPEEN

(45) Date de publication du fascicule du brevet:
**13.06.90**

(51) Int. Cl.⁵: **F16L 37/00**

(21) Numéro de dépôt: **87420145.2**

(22) Date de dépôt: **27.05.87**

(54) Dispositif assisté pour le rapprochement à force et l'assemblage de deux éléments conjugués.

(30) Priorité: **27.05.86 FR 8607765**

(43) Date de publication de la demande:
**02.12.87 Bulletin 87/49**

(45) Mention de la délivrance du brevet:
**13.06.90 Bulletin 90/24**

(84) Etats contractants désignés:
**CH DE ES GB IT LI**

(56) Documents cités:
**CH-A- 472 623
FR-A- 2 350 496**

(73) Titulaire: **S.A. DES ETABLISSEMENTS STAUBLI
(France), B.P. 20 183 Rue des Usines,
F-74210 Faverges(FR)**

(72) Inventeur: **Truchet, Gaston, Route d'Annecy,
F-74210 Faverges(FR)**
Inventeur: **Schwab, Arthur, Benk 19,
D-8589 Bindlach(DE)**

(74) Mandataire: **Monnier, Guy et al, Cabinet
Monnier 150 Cours Lafayette B.P. 3058, F-69393 Lyon
Cédex 03(FR)**

**Description**

On sait que dans un très grand nombre d'applications mécaniques, il est nécessaire d'opérer le rapprochement de deux éléments conjugués avant d'assurer leur assemblage réciproque. Si, dans certains cas, ce rapprochement n'exige qu'un effort réduit et peut de ce fait être aisément effectué à la main, il n'en va pas de même dans d'autres où il est indispensable de déployer un effort final considérable pour être en mesure d'assembler les éléments.

Afin d'illustrer par un exemple évidemment non limitatif les données qui précèdent, on citera le cas des raccords multiples utilisés dans les installations pneumatiques, hydrauliques ou électriques pour le branchement simultané d'une série de circuits indépendants sur une alimentation centralisée. Ce genre de raccords comprend deux supports distincts sur chacun desquels est fixé un nombre approprié d'organes de raccordement à emmanchement, de type mâle pour l'un des supports, femelle pour l'autre. L'emmanchement des deux types d'organes implique un effort important, puisqu'il y a lieu de surmonter la résistance exercée par les moyens de rappel ou de pression associés aux clapets chargés ou aux contacts, et aux mécanismes de verrouillage portés par les éléments en vue de leur retenue à la position assemblée, si bien qu'on est le plus souvent amené à faire comporter aux deux supports un système démultiplicateur d'effort manoeuvré à l'aide d'une poignée appropriée. La manoeuvre de celle-ci permet d'opérer de manière plus aisée le rapprochement à force desdits supports jusqu'à ce que les mécanismes de verrouillage soient susceptibles d'entrer en action. On comprend néanmoins que dans les cas où, pour des questions d'encombrement ou de coût, il n'est pas possible de prévoir un système démultiplicateur à poignée suffisamment efficace, la manoeuvre manuelle reste pénible.

C'est à cet inconvénient qu'entend principalement remédier la présente invention, et ce en incorporant aux mécanismes de verrouillage montés sur les éléments conjuguées à assembler un système d'assistance hydraulique ou pneumatique qui assure à lui seul le rapprochement à force desdits éléments.

Il convient d'observer que l'invention s'applique aux mécanismes de verrouillage à emmanchement et encliquetage, comprenant un organe femelle formé par un verrou que des moyens élastiques animent d'un mouvement orienté perpendiculairement à l'axe d'emmanchement afin de s'effacer lors de l'engagement de l'organe mâle et de venir ensuite coopérer avec une dépression annulaire ménagée sur cet organe mâle immédiatement en arrière d'un embout de centrage. Un tel agencement est décrit dans le document CH-A 472 623.

On rappellera par ailleurs que le document FR-A 2 350 496 décrit un dispositif assisté pour le rapprochement à force et l'assemblage de deux éléments conjugués, qui comprend deux organes de verrouillage propres à être emmanchés axialement l'un à l'intérieur de l'autre. L'organe mâle est porté par une pièce mobile susceptible de coulisser, à la manière d'un piston, dans un corps creux à l'intérieur duquel ladite pièce définit deux chambres dont l'une est alimentée en fluide sous pression pour opérer le rapprochement à force des deux éléments considérés, tandis que l'autre reçoit elle-même le fluide sous pression pour opérer la dissociation automatique de ceux-ci. On observera que la structure est complexe et que le fonctionnement du mécanisme de verrouillage est peu fiable.

Le dispositif suivant l'invention est défini aux revendications 1 et 2.

Le dessin annexé, donné à titre d'exemple, permettra de mieux comprendre l'invention, les caractéristiques qu'elle présente et les avantages qu'elle est susceptible de procurer:

Fig. 1 est une coupe axiale montrant en superposition, préalablement à leur emmanchement, les organes mâle et femelle d'un dispositif assisté suivant l'invention.

Fig. 2, 3 et 4, reproduisent fig. 1 en illustrant différentes phases du fonctionnement de ce dispositif.

Fig. 5 à 8 sont des coupes axiales semblables à celles de fig. 1 à 4, mais correspondant à une variante de mise en œuvre de l'invention suivant laquelle la pièce mobile ou piston porte, non plus l'organe mâle du mécanisme de verrouillage, mais l'organe femelle.

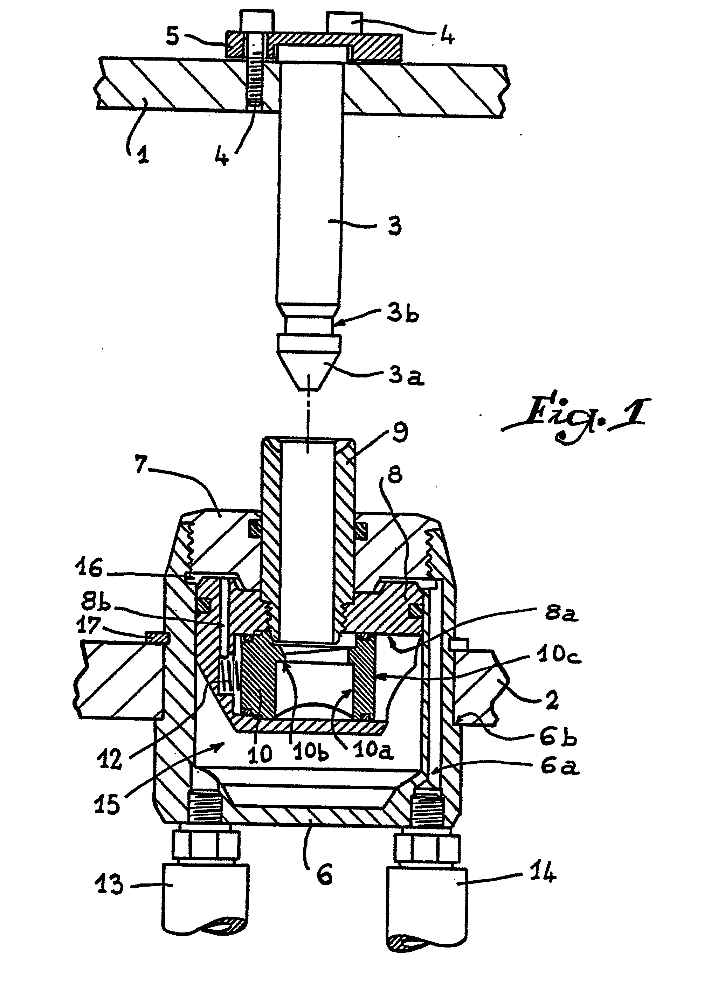

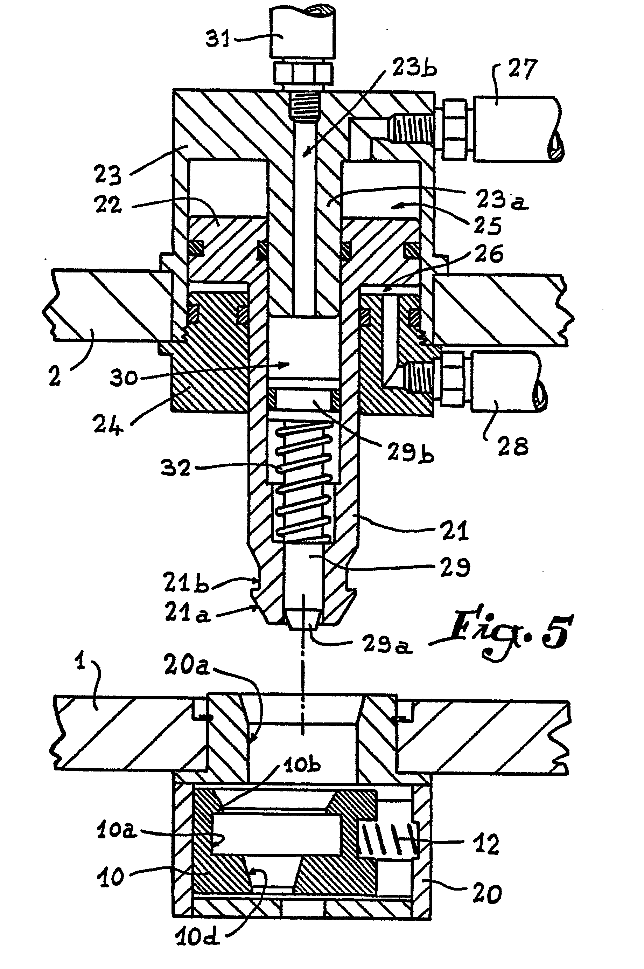

Sur l'ensemble des figures du dessin, les références 1 et 2 désignent les deux éléments à assembler et pour mieux fixer les idées on supposera que l'élément 2 est constitué par une partie fixe contre laquelle doit venir se fixer la partie mobile formée par l'élément 1. Pour assurer cet assemblage, il est prévu plusieurs dispositifs identiques à celui représenté en fig. 1 à 4 ou en fig. 5 à 8.

Chaque dispositif comprend une tige cylindrique 3 pourvue à son extrémité libre d'un embout 3a à profil tronconique, déterminé par une dépression annulaire 3b. Cette tige 3 est fixée à l'élément 1 de toute manière appropriée, par exemple à l'aide de vis telles que 4 associées à une plaquette 5.

L'élément 2 porte un corps creux formé par l'assemblage étanche d'une douille cylindrique 6 fermée à l'une de ses extrémités, et d'une bague 7 qui obture l'extrémité opposée. Dans ce corps 6–7 est montée à coulissement une pièce 8 à section circulaire, propre à former piston comme on le comprendra plus loin. Cette pièce ou piston 8 supporte une cheminée axiale 9 engagée de manière étanche dans l'ouverture de la bague 7. Le débouché intérieur de cette cheminée 9 coïncide avec une perforation 10a ménagée dans un verrou cylindrique 10 à axe horizontal, engagé à coulissement étanche à l'intérieur d'un alésage borgne 8a du piston 8, lequel alésage est orienté transversalement à l'axe de ce piston. Un ressort 12, prenant appui contre le fond de l'alésage 8a, tend à repousser le verrou 10 vers l'extérieur, ce déplacement étant limité par l'extrémité inférieure de la cheminée 9 jouant ainsi le rôle de butée.

Au corps 6-7 sont associées deux canalisations 13 et 14 reliées à une source de fluide sous pression à travers un distributeur approprié. La canalisation 13 débouche directement dans la chambre 15 disposée à l'opposé de la cheminée 9, tandis que la canalisation 14 est réunie par un canal 6a à la chambre opposée 16 ménagée entre la bague 7 et la face du piston 8 qui supporte ladite cheminée. Un canal 8b est pratiqué dans ce piston 8 pour assurer la communication entre la chambre 16 et l'extrémité de l'alésage 8a qui renferme le ressort 12 associé au verrou 10.

La fixation du corps 6-7 sur l'élément 2 peut être opérée de toute manière appropriée, par exemple à l'aide d'un jonc fendu 17 et d'un épaulement extérieur 6b de la douille 6.

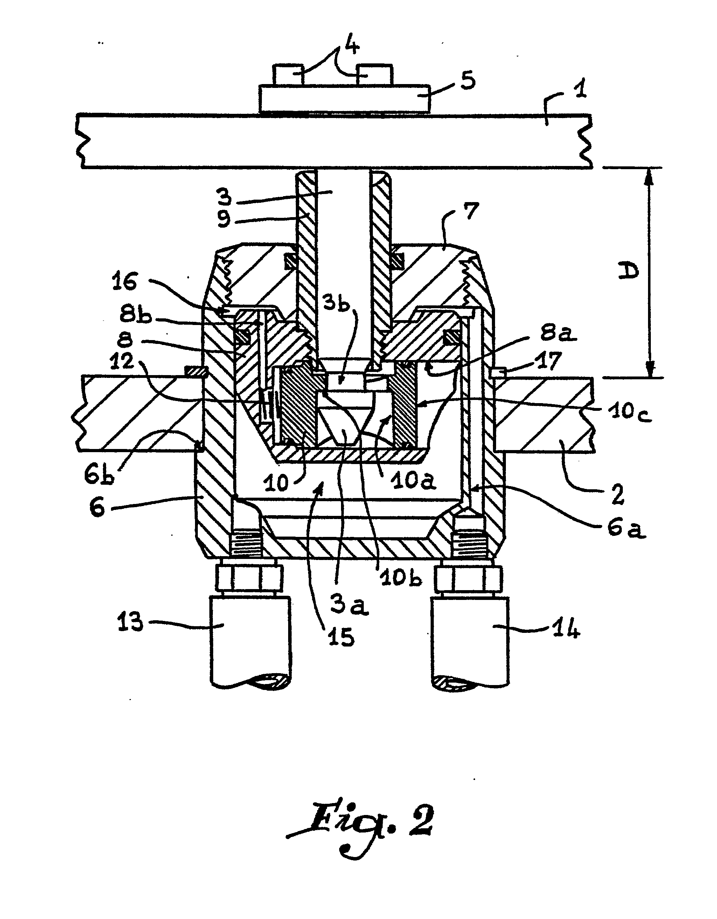

Le fonctionnement est illustré par les fig. 2, 3 et 4 du dessin annexé.

Les éléments 1 et 2 à assembler sont en premier lieu assemblés manuellement l'un à l'autre, en ce sens que la tige mâle 3 de chaque dispositif est engagée dans la cheminée correspondante 9 jusqu'à ce que l'embout 3a pénètre dans la perforation 10a du verrou 10. L'extrémité de cet embout 3a vient buter contre une dent latérale 10b prévue dans cette perforation 10a, mais le verrou s'efface à l'encontre de son ressort 12 sans gêner la pénétration de la tige 3. Le verrou 10 revient élastiquement à sa position originale lorsque la dépression annulaire 3b de la tige 3 vient se disposer en vis-à-vis de la dent 10b.

On se trouve alors à la position illustrée en fig. 2 ; les deux éléments 1 et 2 sont réunis l'un à l'autre par les dispositifs suivant l'invention, mais la valeur D de leur écartement mutuel est telle qu'aucune résistance sensible n'a encore été rencontrée par l'utilisateur.

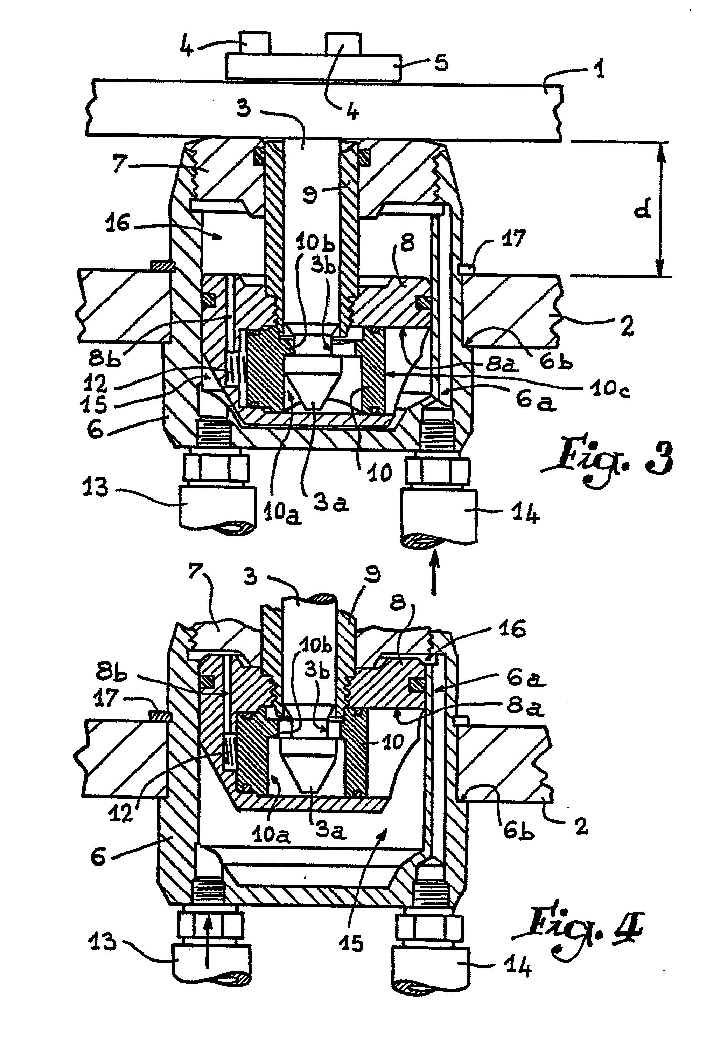

Il suffit alors de manoeuvrer le distributeur pneumatique ou hydraulique pour admettre le fluide sous pression dans la canalisation 14, la canalisation 13 étant reliée à l'atmosphère ou à la bâche de l'installation. Le fluide emplit la chambre 16 et repousse axialement le piston 8. Comme l'élément 2 a été supposé fixe, l'élément 1 se rapproche dudit élément 2 à la manière illustrée en fig. 3, l'écartement étant alors réduit à la valeur d. C'est donc l'installation pneumatique ou hydraulique qui exerce l'effort de rapprochement final des deux éléments.

On observera que le fluide sous pression qui emplit la chambre 16 pénètre dans le canal 8b et vient ainsi exercer sur la face intérieure du verrou 10 une pression qui renforce l'action du ressort 12 sur ledit verrou. On évite de la sorte tout risque de déverrouillage intempestif des deux éléments 1 et 2.

Pour dissocier ces deux éléments, il suffit de manoeuvrer le distributeur pour alimenter la chambre opposée 15 à travers la canalisation 13, la canalisation 14 permettant l'évacuation du fluide hors de la chambre 16. Le piston 8 se déplace donc en direction de l'élément 1, ce qui a pour effet de repousser celui-ci, le fluide sous pression venant en fin de mouvement prendre appui contre la face libre 10c (fig. 4) du verrou 10 qui est repoussé à l'encontre du ressort 12. La dent 8b de ce verrou est ainsi extraite de la dépression 3b, en permettant de la sorte la dissociation axiale complète des deux éléments 1 et 2.

En conséquence, les manoeuvres de rapprochement à force et de dissociation sont réalisées de manière entièrement automatique par le fluide sous pression de l'installation, sans intervention manuelle.

Dans la forme de réalisation illustrée en fig. 5 à 8, le verrou 10 et le ressort 12 qui lui est associé sont montés à l'intérieur d'un corps creux 20 rendu solidaire de l'élément 1 supposé mobile, ledit verrou étant convenablement guidé dans son déplacement orienté transversalement à l'axe du corps 20.

Ce verrou 10 coopère avec un organe mâle de verrouillage constitué ici par une tige tubulaire 21 profilée comme la tige 3, afin de comporter un embout terminal 21a en avant d'une dépression annulaire 21b. Cette tige creuse 21 est solidaire d'une pièce mobile ou piston 22 qui coulisse de manière étanche à l'intérieur d'un corps formé par l'assemblage d'une douille 23 et d'une bague 24, lequel corps est fixé sur l'élément 2 supposé fixe. Ce piston 22 définit ainsi dans le corps 23-24 deux chambres opposées 25 et 26, respectivement raccordées par des canalisations 27 et 28 à l'installation d'alimentation à travers un distributeur classique.

On notera qu'à l'intérieur de la tige 21 est guidé un poussoir 29 dont l'extrémité 29a disposée au niveau de l'embout 21a présente un profil tronconique. L'extrémité opposée 29b est conformée à la manière d'un piston qui définit, avec la face frontale d'un bossage axial 23a du fond fermé de la douille 23, une chambre 30 reliée par un canal 23b à une canalisation 31, elle-même réunie au distributeur sus-mentionné. A l'opposé de la chambre 30, le poussoir 29 est entouré par un ressort 32 qui tend à le repousser en direction du bossage 23a.

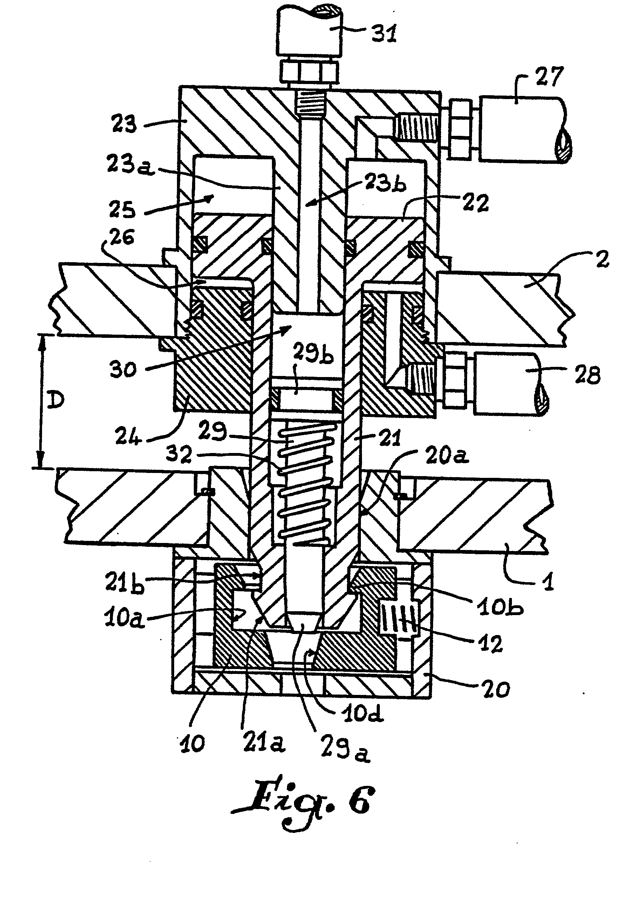

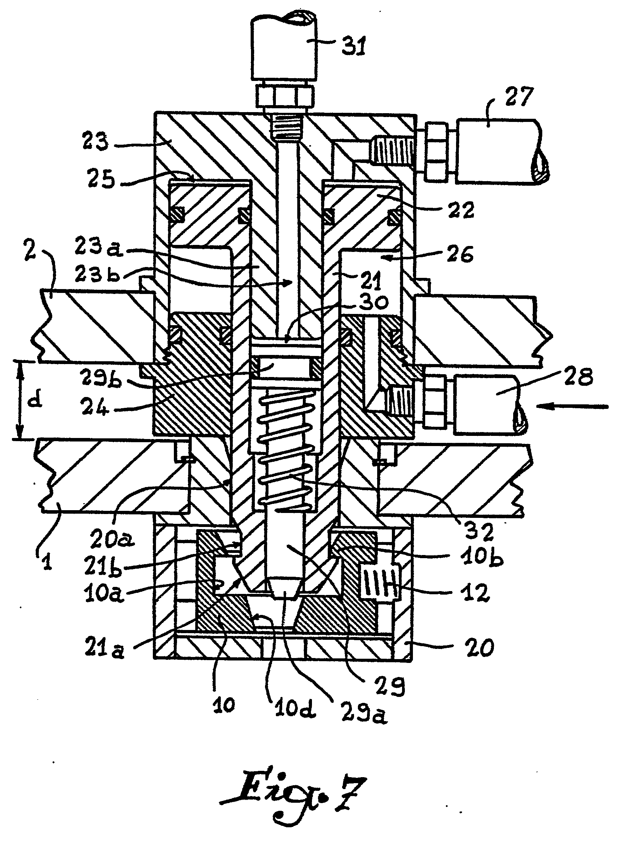

Le fonctionnement de ce dispositif assisté est similaire à celui décrit en référence à fig. 1 à 4. La tige 21 est en premier lieu manuellement introduite dans l'ouverture axiale 20a du corps 20 jusqu'à ce que la dent 10b du verrou 10, chassé latéralement par l'embout 21a, vienne s'encliqueter élastiquement dans la dépression annulaire 21b, comme montré en fig. 6. Le fluide sous pression est alors admis dans la chambre 26 pour chasser le piston 22 et la tige 21, ce qui provoque le rapprochement à force des deux éléments 1 et 2 (fig. 7) qui sont maintenus solidement assemblés l'un à l'autre aussi longtemps que la canalisation 28 est alimentée.

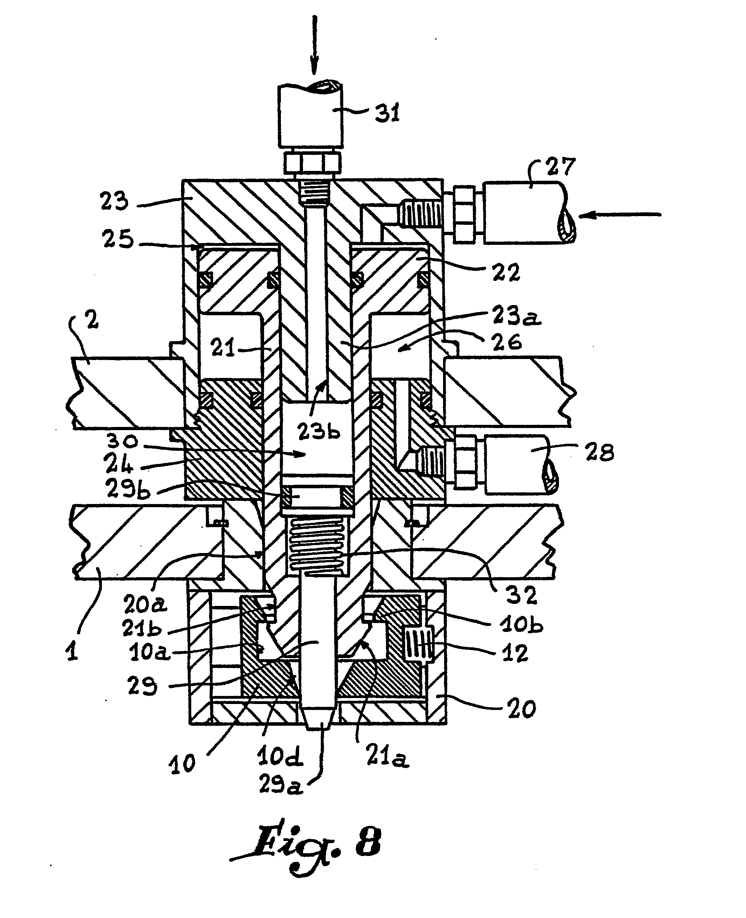

Pour opérer la dissociation des deux éléments 1 et 2, les canalisations 31 et 27 sont alimentées afin de provoquer d'une part le coulissement du poussoir 29 à l'encontre de son ressort 32 (fig. 8), l'extrémité 29a dudit poussoir venant coopérer avec une portée de centrage 10d du verrou 10 qui est de la sorte amené à la position déverrouillée, d'autre part le déplacement vers le bas du corps 20 et de l'élément 1 par appui de l'embout 21a contre la paroi qui borde ladite portée 10d. Les deux éléments 1 et 2 se trouvent alors libérés et écartés.

Il va de soi qu'en certains cas, on peut se dispenser des chambres 15 et 25, la dissociation des deux éléments étant opérée sous l'effet de moyens élastiques de rappel tandis que la manoeuvre du verrou 10 est assurée manuellement à l'aide d'un organe extérieur approprié.

## Revendications

1. Dispositif assisté pour le rapprochement à force et l'assemblage de deux éléments conjugués (1, 2), du genre équipé de deux organes de verrouillage propres à être emmanchés axialement l'un à l'intérieur de l'autre, l'organe femelle monté sur l'un des éléments étant constitué par un verrou (10) que des moyens élastiques (12) animent d'un mouvement orienté perpendiculairement à l'axe d'emmanchement afin de s'effacer lors de l'engagement de l'organe mâle (3) monté sur l'autre élément et de venir ensuite coopérer avec une dépression annulaire (3b) ménagée sur ledit organe mâle, en même temps que l'organe femelle est porté par une pièce mobile (8) susceptible de coulisser, à la manière d'un piston, dans un corps creux (6–7) à l'intérieur duquel ladite pièce définit deux chambres (15 et 16) dont l'une (16) est alimentée en fluide sous pression pour opérer le rapprochement à force des deux éléments considérés tandis que l'autre (15) reçoit elle-même le fluide sous pression pour assurer la dissociation automatique desdits éléments, caractérisé en ce que le verrou (10) est mobile à l'intérieur d'un alésage (8a) ménagé transversalement dans la pièce mobile ou piston (8) et définit ainsi dans ledit alésage deux chambres opposées respectivement reliées aux deux chambres définies par ladite pièce dans le corps creux (6–7), de façon à ce que ledit verrou soit commandé axialement par le fluide sous pression préalablement au rapprochement à force et à la dissociation des deux éléments (1, 2) considérés.

2. Dispositif assisté pour le rapprochement à force et l'assemblage de deux éléments conjugués (1, 2), du genre équipé de deux organes de verrouillage propres à être emmanchés axialement l'un à l'intérieur de l'autre, l'organe femelle monté sur l'un des éléments étant constitué par un verrou (10) que des moyens élastiques (12) animent d'un mouvement orienté perpendiculairement à l'axe d'emmanchement afin de s'effacer lors de l'engagement de l'organe mâle (21) monté sur l'autre élément et de venir ensuite coopérer avec une dépression annulaire (21b) ménagée sur ledit organe mâle, en même temps que l'organe mâle est porté par une pièce mobile (22) susceptible de coulisser, à la manière d'un piston, dans un corps creux (23–24) à l'intérieur duquel ladite pièce définit deux chambres (25 et 26) dont l'une (26) est alimentée en fluide sous pression pour opérer le rapprochement à force des deux éléments considérés tandis que l'autre (25) reçoit elle-même le fluide sous pression en vue de la dissociation desdits éléments, caractérisé en ce que l'organe mâle (21) est prévu creux pour déterminer une troisième chambre (30) qui renferme un poussoir (29) susceptible d'être déplacé axialement, à l'encontre de moyens élastiques de rappel (32), par le fluide sous pression admis dans ladite troisième chambre (30) et dans la chambre (25) du corps creux (23–24), afin que l'extrémité libre (29a), convenablement profilée à cet effet, du poussoir (29) précité, puisse venir coopérer avec une portée de centrage (10d) pratiquée sur le verrou (10) pour amener celui-ci à la position effacée et permettre ainsi la dissociation automatique des deux éléments (1, 2).

## Claims

1. Power-assisted device for bringing together tightly and assembling two paired elements (1, 2), of the type equipped with two locking components suitable for being inserted axially one inside the other, the female component, mounted on one of the elements, being formed by a latch (10) which is driven by elastic means (12) with a movement orientated perpendicularly to the axis of insertion in order to move aside upon the engagement of the male component (3) mounted on the other element and then to cooperate with an annular depression (3b) on said male component, at the same time as the female component is carried by a mobile part (8) which is capable of sliding, in the manner of a piston, in a hollow body (6–7), inside which said part defines two chambers (15 and 16), one (16) of which is supplied with pressurised fluid to produce the bringing together tightly of the two elements in question, while the other (15) itself receives the pressurised fluid to produce the automatic dissociation of said elements, characterised in that the latch (10) is movable within a bore (8a) made transversely in the mobile part or piston (8) and thus defines in said bore two opposed chambers respectively connected to the two chambers defined by said part in the hollow body (6–7), in such a manner that said latch is operated axially by the pressurised fluid prior to the bringing together tightly and the dissociation of the two elements (1, 2) in question.

2. Power-assisted device for bringing together tightly and assembling two paired elements (1, 2), of the type equipped with two locking components suitable for being inserted axially one inside the other, the female component, mounted on one of the elements, being formed by a latch (10) which is driven by elastic means (12) with a movement orientated perpendicularly to the axis of insertion in order to move aside upon the engagement of the male component (21) mounted on the other element and then to cooperate with an annular depression (21b) on said male component, at the same time as the male component is carried by a mobile part (22) which is capable of sliding, in the manner of a piston, in a hollow body (23–24), inside which said part defines two chambers (25 and 26), one (26) of which is supplied with pressurised fluid to produce the bringing together tightly of the two elements in question, while the other (25) itself receives the pressurised fluid with the purpose of the dissociation of said elements, characterised in that the male component (21) is made hollow in order to determine a third chamber (30) which contains a push rod (29) which can be displaced axially, against elastic return means (32), by the pressurised fluid admitted into said third chamber (30) and into the chamber (25) of the hollow body (23–24), so that the free end (29a), suitably profiled for this purpose, of the afore-mentioned push rod (29), can cooperate with a centring seat (10d) on the latch (10) to bring the latter into the moved-aside position and thus to permit the automatic dissociation of the two elements (1, 2).

## Patentansprüche

1. Kraftunterstützte Vorrichtung zum Zusammenbringen und Montieren von zwei zusammengehörenden Elementen (1, 2) einer Art, die mit zwei Verriegelungstellen ausgerüstet ist, die geeignet sind, daß das eine axial in das Innere des anderen gesteckt werden kann, wobei das auf das eine der Elemente montierte weibliche Teil aus einem Riegel (10) besteht, den elastische Vorrichtungen (12) zu einer senkrecht zur Einsteckachse ausgerichteten Bewegung veranlassen, um während des Einrastens des auf dem anderen Element montierten männlichen Teils zurückzutreten und anschließend mit einer auf dem männlichen Teil (3) ausgeführten ringfömigen Vertiefung (3b) in Verbindung zu treten, zur gleichen Zeit, in der das weibliche Teil von einem beweglichen Teil (8) getragen wird, das geeignet ist, in der Art eines Kolbens in einem Hohlkörper (6–7) zu gleiten, in dessen Innern dieses Teil zwei Kammern (15, 16) bildet, wovon die eine (16) von einer unter Druck stehenden Flüssigkeit versorgt wird, um die kraftunterstützte Annäherung der beiden betrachteten Elemente durchzuführen, während die andere (15) selbst die unter Druck stehende Flüssigkeit erhält, um die automatische Trennung der Elemente sicherzustellen, dadurch gekennzeichnet, daß der Riegel (10) unterhalb einer transversal in das bewegliche Teil oder den Kolben (8) ausgeführten Bohrung (8a) beweglich ist und somit in der Bohrung zwei einander gegenüberliegende Kammern bildet, die jeweils mit den von dem Teil in dem Hohlkörper (6–7) gebildeten Kammern verbunden sind, und zwar derart, daß der Riegel axial von der unter Druck stehenden Flüssigkeit vor der kraftunterstützten Annäherung und vor der Trennung der beiden betrachteten Elemente (1, 2) gesteuert wird.

2. Kraftunterstützte Vorrichtung zum Zusammenbringen und Montieren von zwei zusammengehörenden Elementen (1, 2) einer Art, die mit zwei Verriegelungsteilen ausgerüstet ist, die geeignet sind, daß das eine axial in das Innere des anderen gesteckt werden kann, wobei das auf das eine der Elemente montierte weibliche Teil aus einem Riegel (10) besteht, den elastische Vorrichtungen (12) zu einer senkrecht zur Einsteckachse ausgerichteten Bewegung veranlassen, um während des Einrastens des auf dem anderen Element montierten männlichen Teils zurückzutreten und anschließend mit einer auf dem männlichen Teil (21) ausgeführten ringförmigen Vertiefung (21b) in Verbindung zu treten, zur gleichen Zeit, in der das weibliche Teil von einem beweglichen Teil (22) getragen wird, das geeignet ist, in der Art eines Kolbens in einem Hohlkörper (23–24) zu gleiten, in dessen Inneren dieses Teil zwei Kammern (25) und (26) bildet, wovon die eine (26) von einer unter Druck stehenden Flüssigkeit versorgt wird, um die kraftunterstützte Annäherung der beiden betrachteten Elemente durchzuführen, während die andere (25) selbst zur Trennung der Elemente die unter Druck stehende Flüssigkeit enthält, dadurch gekennzeichnet, daß das männliche Teil (21) hohl vorgesehen ist, um eine dritte Kammer (30) zu bilden, die einen Stößel (29) umschließt, der geeignet ist, axial gegen elastische Rückführvorrichtungen (32) durch die unter Druck stehende, in die dritte Kammer (30) und in die Kammer (25) des Hohlkörper (23–24) eingelassene Flüssigkeit bewegt zu werden, damit das freie Ende (29a) des vorgenannten Stößels (29), das zu diesem Zweck passend geformt ist, mit einem auf dem Riegel (10) ausgeführten Zentriersitz (10d) in Verbindung tritt, um diesen in die zurückgeschobene Stellung zu bringen und so die automatische Trennung der beiden Elemente (1, 2) zu ermöglichen.

Fig. 1

*Fig. 2*

Fig. 3

Fig. 4

*Fig. 5*

EP 0 247 956 B1

*Fig. 6*

Fig. 7

*Fig. 8*